(19)

Europäisches Patentamt
European Patent Office
Office européen des brevets

(11)　**EP 4 471 206 A2**

(12)　**EUROPEAN PATENT APPLICATION**

(43) Date of publication:
　　04.12.2024　Bulletin 2024/49

(21) Application number: 24205993.9

(22) Date of filing: **19.01.2023**

(51) International Patent Classification (IPC):
　　*D21H 11/14* (2006.01)

(52) Cooperative Patent Classification (CPC):
　　**D21C 5/00; D21C 3/02; D21C 9/1073; D21C 9/123;
　　D21C 9/163; D21H 11/14**

(84) Designated Contracting States:
　　**AL AT BE BG CH CY CZ DE DK EE ES FI FR GB
　　GR HR HU IE IS IT LI LT LU LV MC ME MK MT NL
　　NO PL PT RO RS SE SI SK SM TR**

(30) Priority: **20.01.2022　SE 2250049**

(62) Document number(s) of the earlier application(s) in
　　accordance with Art. 76 EPC:
　　**23701419.6 / 4 320 309**

(71) Applicant: **Circulose AB
　　103 23 Stockholm (SE)**

(72) Inventors:
　　• **KALDÉUS, Tahani
　　　112 28 Stockholm (SE)**

　　• **HENRIKSSON, Gunnar
　　　170 62 Solna (SE)**
　　• **LINDSTRÖM, Mikael
　　　181 66 Lidingö (SE)**
　　• **WILSBY, Astrid
　　　118 20 Stockholm (SE)**

(74) Representative: **Ström & Gulliksson AB
　　Box 5275
　　102 46 Stockholm (SE)**

Remarks:
　　This application was filed on 10-10-2024 as a
　　divisional application to the application mentioned
　　under INID code 62.

(54)　**RECYCLING OF MIXTURES OF TEXTILES COMPRISING CELLULOSE**

(57)　There is provided a method for recycling a mixture of textiles comprising natural cellulose fibers and man-made cellulose fibers. After a mechanical disintegration the material is swelled under reducing conditions and thereafter bleached with at least one oxidative bleach. The bleaching is adjusted so that the limiting viscosity number as determined by ISO 5351:2010 for the resulting material after step d) is reduced to a value in the interval 200-1200 ml/g, or not higher than the initial limiting viscosity number. The reactivity of the material is improved, in particular for repeated recycling of viscose fibers. This makes it easier to use the fibers in a subsequent viscose process where steps can be omitted or reduced.

EP 4 471 206 A2

## Description

Technical Field

The invention relates to recycling of mixtures of textiles comprising natural cellulose fibers such as cotton and textiles comprising man-made cellulose fibers such as viscose and lyocell.

Background

Cotton is a well-known natural fiber used for textiles, and compared to synthetic petroleum based fibers, it is renewable. However, cotton has a large environmental impact as the production in many cases is non-sustainable. Beside the large water consumption, cotton plantations are also often heavily sprayed with pesticides, hazardous for both nature, animals, and the health of cotton farmers.

Despite the considerable environmental impact, the textile industry is growing fast. The consumption has increased at a fast pace. The textile industry is a large industry contributor to pollution, including $CO_2$ emissions.

It is desirable to reduce the environmental impact of the textile industry by increasing the recycling of textiles.

Although it is possible to reuse textiles there is a limited reuse of textiles, since the textiles can only withstand a limited number of cycles of reuse before the quality becomes too low. Another option for recycling old clothes is recycling of the material. There are a broad variety of recycling types for textile waste. An example of mechanical recycling is shredding textile for uses in padding and stuffing. Mechanically recycled textile fibers have a limited number of lifecycles since the fibers degrade in length and quality for every recycling loop.

Chemical recycling can be made in various way producing multiple products depending on the textile source. Chemical recycling of cotton textiles can be made in various ways. It can be done by primary recycling where textile fibers are recycled producing new textile fibers or by secondary recycling processing end-use products from textile fibers. An example of a secondary recycling of cotton textiles is the conversion of cotton textile to glucose. The glucose can be fermented to bioethanol or used to produce other chemicals. Another secondary recycling of cotton textile is the use of the cellulose rich material in paper making.

Cotton fiber is a seed hair fiber from the cotton plant and is used in the textile industry and in high quality papers. The cotton fiber has a high $\alpha$-cellulose content of about 90%. The high cellulose content can be compared with the considerably lower proportion in wood fiber, 40-50%. The cellulose content of cotton is also higher than in other non-wood natural fibers such as jute, kenaf and flax. Other compounds in cotton fibers are for example waxes, proteins and pectin. After defatting the cotton, removing waxes and other compounds, the fiber consists almost only of cellulose.

Cotton cellulose has a high degree of crystallinity due to its high purity. The degree of crystallinity can, however, not easily be determined since it changes through the plants' growth period, and also between different cell wall layers. In addition, different measurement techniques result in a variation ranging from 50 to 100% degrees of crystallinity.

Cellulose can be highly ordered into a crystalline structure. The compact crystalline structure prevents the regents and solvent to access the cellulose and therefore lowers the reactivity. To improve the cellulose accessibility and reactivity chemical pretreatments can be performed. Some pretreatments swell the cellulose fiber and thus breaking some of the hydrogen bonds that are linking the cellulose chains together. Strongly packed regions will loosen up and be more accessible for further modification. The pretreatment will result in a more homogeneous distribution of reaction taking place along the chain and a lower demand of the amount of any reagent needed.

Mechanical treatment can also be used, whereby the active surface of the cellulose fibers is increased by beating and thereby results in an improvement of the cellulose accessibility.

Two examples of a primary recycling are using recycled pulp material in the viscose and Lyocell process, producing fibers of regenerated cellulose. The Lyocell process was developed in the 1980s. The cotton cellulose is dissolved in N-methylmorpholine N-oxide, NMMO, and later regenerated and spun in water.

The viscose process is a well-known multistep process to produce a regenerated textile fiber. The exact partition and labeling of the process step varies, however, the chemistry remains the same. The overall objective of the process is to first increase the reactivity and accessibility of the cellulose fiber followed by solubilization of the cellulose by xanthation. The solubilized cellulose is later regenerated, and viscose fibers are spun. The ability of solubilize cellulose by xanthation was proven to work in 1891 by Cross, Bevan and Beadle.

Dissolving pulp → Steeping → Pressed → Shredded

Dissolving ← Xanthation ← Mercerization / pre-ageing

Ripening → Filtering → De-aerated → Filtering

Washing ← Stretching ← Spinning process

Cutting → Viscose fiber

Dissolving pulps are used to produce viscose. The pulp grade can be produced form several different cellulose sources, the most common one is wood which stands for about 85% of the total production. Another cellulose source is cotton linters which stands for the remaining 15%. Dissolving pulps have been extensively delignified resulting in a high concentration of $\alpha$-cellulose (95-98%). The purity is of importance as other polysaccharides as hemicelluloses and extractives can interfere with the viscose process.

The cellulose is converted to alkali cellulose by immersing the pulp into a soda solution, the steeping step. The conversion is an important step to achieve a good result in the later xanthation step. The soda treatment can in addition to deprotonate cellulose, remove any potential remaining unwanted material, such as hemicelluloses, that is left in the pulp. The fibers will swell during the treatment, enabling the soda to penetrate the fiber wall further. The concentration and temperature of the soda treatment determines the extent of both conversion and swelling, an optimization is required to reach the most preferable outcome.

The alkali cellulose mixture is pressed to remove excess of soda. The excess of soda will be filtered to remove fines and other particles and then reused in the prior steeping step.

The alkali cellulose slurry is then shredded to further enhance the reaction in both the mercerization and xanthation steps, respectively. This is a mechanical pretreatment as mentioned above that increases the active surface, enable accessibility for sodium hydroxide and carbon disulphide.

The shredded alkali cellulose is stored in silos during the mercerization, pre-ageing, step where an oxidative depolymerization reaction takes place. The degree of polymerization, DP, is reduced to achieve a sufficiently low viscosity of the viscose dope. However, to maintain a good tensile strength of the viscose fiber, it is of importance not to lower the DP excessively. Generally, a DP of 250- 300 is suitable for alkali cellulose prior to xanthation.

During the xanthation carbon disulphide, $CS_2$, reacts with the alkali cellulose producing the dissolved product cellulose xanthate. All three hydroxyl groups of the glucose unit are possible sites for the substitution reaction. It is sufficient with a degree of substitution of 0.5 for a fiber free solution, however, the value varies between 0.5 and 0.7 at technical conditions.

The alkali cellulose xanthate is then dissolved in a sodium hydroxide solution. The concentration of the sodium hydroxide solution is set to result in predetermined concentrations of both the alkali and the cellulose in the viscose dope. Following the dissolution the viscose dope is placed in a ripening vessel for 16-17 hours. In the ripening vessel the number of xanthate groups on each glucose unit reduces and distributes evenly throughout the chain to enable an acceptable coagulation in the later spin bath. To further improve the spinning process, the viscose dope is filtered, de-aerated and then filtered again. By removing air bubbles, the risk of breakage or uneven streams in the jet rays during the spinning decreases.

The viscose dope is pushed out in jet rays directly into an acid bath with sulphuric acid, sodium sulfate and zinc sulfate. The alkali cellulose xanthate will, in contact with the acid, quickly regenerate into cellulose, forming filaments and later staple fibers.

The spinning process is an important part of the viscose process, and it is important to keep the extrusion of the viscose dope in the acid bath at a steady pace. Interruptions can be caused by e.g., air bubbles as mentioned above or clogging in the spinnerets. It is also important to keep the regeneration at a good rate. The rate can be controlled by several parameters, such as the concentration in the spin bath and the temperature.

During or soon after the spinning step the extruded filaments are stretched to improve their tensile strength. By performing the stretching soon after the spinning, when the cellulose chains have not yet been fully organized in the filaments, it is possible to do an improvement in the alignment of the chains.

The viscose filaments are then washed to remove all contamination form the compounds from prior steps. The washing is executed in multiple steps due to the diverse set of compounds to be removed.

A set of different chemicals are used in the viscose process, such as carbon disulphide, sodium hydroxide and sulfuric acid. Carbon disulphide has received the most attention as it is harmful both for the environment but also causes health effects. Reported health effects are e.g., cardiovascular and neurological and reproductive effects. It is therefore important to minimize the consumption of for instance carbon disulfide. With a higher reactivity of the starting material in the viscose process, smaller quantities of $CS_2$ would be needed in the later viscose production steps. Thus it would be desirable to improve the reactivity.

Recycling of textiles has been disclosed in several patent publications for instance the following.

WO 2018/104330 discloses a cellulose based fibre made of i) a cellulose dissolving pulp, and ii) a recycled cellulose textile, which is treated to swell the cellulose with a reducing additive and a) bleached with oxygen at alkaline conditions with a pH in the range 9-13.5 and/or b) bleached with ozone at acid conditions below pH 6, wherein the cellulose based fibre is manufactured with one selected from a Viscose process and a Lyocell process. Both natural cellulosic forms and all regenerated cellulosic forms can be utilized as raw material.

US 2020/0347520 discloses a method of recycling a textile material which comprises cellulose for manufacturing regenerated cellulosic molded bodies, wherein in the method the textile material is comminuted, at least a part of non-fiber-constituents of the comminuted textile material is separated from fiber-constituents of the comminuted textile material, at least a part of non-cellulosic fibers of the fiber-constituents is mechanically separated from cellulosic fibers of the fiber-constituents, at least a further part of the non-cellulosic fibers is chemically separated from the cellulosic fibers, and the molded bodies are generated based on the cellulosic fibers after mechanically separating and chemically separating.

WO 2018/073177 discloses a method for recycling textiles comprising cellulose with the following steps of: optionally disintegrating the textile, swelling the cellulose, under reducing conditions, wherein at least one reducing agent is present at least during a part of the swelling, and then performing at least one of the following two bleaching steps in any order: i) bleaching the material with oxygen at alkaline conditions with a pH in the range 9-13.5, and ii) bleaching the material with ozone at acid conditions below pH 6. The textiles to be recycled can all natural cellulosic forms and all regenerated cellulosic forms. It is mentioned that the viscosity can be controlled. There is disclosed that different types of textiles are also encompassed as long as at least a part of the textiles comprise cellulose. There is further disclosed that the textile can be at least one selected from the group consisting of cotton, lyocell, rayon, and viscose. Mixtures of textiles comprising both natural cellulose fibers such as cotton and man-made cellulose fibers such as viscose are not disclosed as suitable to combina with the recycling method. WO 2018/073177 requires cellulose to be present, however WO 2018/073177 does not require both man made and natural cellulose fibers to be present.

In the prior art it is known to recycle mixtures of textiles, including mixtures of textiles comprising various forms of cellulose.

During the recycling of mixtures of textile comprising both natural cellulose fibers such as cotton and man-made cellulose fibers such as viscose and lyocell, there is a need to decrease the viscosity of the natural cellulose fibers such as cotton, whereas the viscosity of man-made cellulose fibers such as viscose and lyocell do not have to be decreased. This is applicable for instance when the material is to be used for a subsequent viscose process.

A solution where the different textiles are carefully sorted before recycling is less preferred due to higher costs and besides it would not work for textiles comprising both natural and man-made cellulose fibres in the same textile.

A problem in the state of the art is thus how to improve the recycling of mixtures of textiles and provide a method which can recycle mixtures of textiles comprising natural cellulose fibers and man-made cellulose fibers so that the resulting material is suitable to use in a following viscose process.

Summary

It is an object of the present invention to alleviate at least some of the problems in the prior art and to provide an improved method for treating reclaimed cellulose fibres in textiles, where the textiles comprise both natural cellulose fibers and man-made fibers.

In a first aspect there is provided a method for recycling a mixture of textiles comprising natural cellulose fibers and man-made cellulose fibers, said method comprising the sequential steps:

a. providing at least one textile material, wherein the at least one textile material comprises natural cellulose fibers and man-made cellulose fibers,

b. mechanically disintegrating the material,

c. treating the material to swell the cellulose fibers in an aqueous solution during a time in the interval 5 minutes to 24 hours, preferably 20 minutes to 120 minutes, under reducing conditions, wherein at least one reducing agent is present at least during a part of the swelling, wherein the pH is in the range 8-14, wherein the temperature is above 0 °C, but not exceeding 150° C,

d. performing at least one oxidative bleach,

wherein the time for the at least one oxidative bleach in step d) and a concentration of at least one bleaching substance in step d) are adjusted so that the limiting viscosity number as determined by ISO 5351:2010 for the resulting material after step d) is reduced to a value in the interval 200-1200 ml/g.

An advantage is that the natural cellulose fibers with a lumen (such as cotton) are degraded to a significant extent, whereas the man-made cellulose fibers without a lumen (such as viscose) are hardly degraded at all under the same conditions so that the natural cellulose fibers with a lumen can be degraded to a suitable limiting viscosity number for a subsequent viscose process. The man-made cellulose fibers without a lumen typically already have a suitable limiting viscosity number for a subsequent viscose process and thus the mixture can be used in a subsequent viscose process.

Another advantage is that the reactivity of the material becomes improved, which is an advantage for instance for various subsequent processes, such as a viscose process. The higher reactivity facilitates dissolution of the cellulose and reduces the need for hazardous chemicals in a subsequent viscose process.

Although mixtures of textiles have been disclosed the treatment of a mixture of natural cellulose fibers and man-made cellulose fibers in the method according to the invention is not disclosed previously and has unexpectedly shown distinct advantages since the natural cellulose fibers are degraded, while the man-made cellulose fibers are kept virtually intact. This is highly desirable in the recycling process.

Brief description of the drawings

Aspects and embodiments will be described with reference to the following drawings in which:

Figure 1 shows degradation of cellulose throughout the pulping process. Process step 0 is after the mechanical beating, 1 is after the sodium dithionite step, 2 is after ozone bleaching step and 3 is after a wash.

Figure 2 shows the distribution plots from the PDI analysis of light and dark blue cotton-viscose pulp.

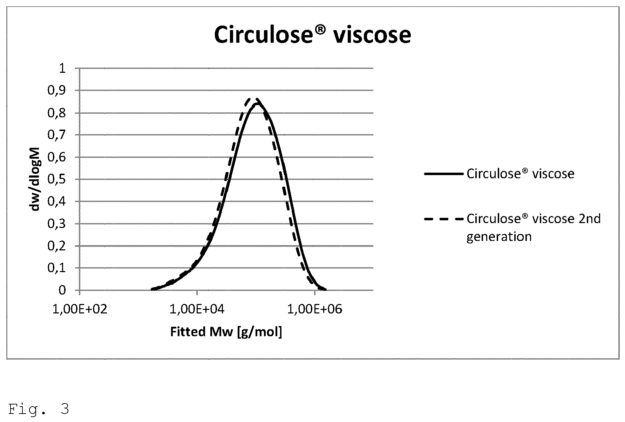

Figure 3 shows a distribution curve for the molecular weight (Mw) for viscose made from recycled textile (i.e. viscose made from Circulose®) and also the corresponding distribution curve for viscose made of recycled Circulose®, i.e. when the textile was recycled twice. A LiCl/DMAc system was used to dissolve the cellulose for size exclusion chromatography. The mobile phase was 0.5 wt% LiCl/DMAc, flow rate 1 ml/min, temperature 70 °C.

Figure 4 shows reactivity data obtained from the Fock test.

Detailed description

The following detailed description discloses by way of examples details and embodiments by which the invention may be practised.

It is to be understood that the terminology employed herein is used for the purpose of describing particular embodiments only and is not intended to be limiting since the scope of the present invention is limited by the appended claims.

The term "lumen" as used throughout the description and the claims denotes the open spaces located inside the macrofibrils in cellulose fibers. Lumen is a botanical term for cavities and open spaces in plant and tree cells. In plants and cells, liquid is typically transported in the lumen.

The term "natural cellulose fiber" as used throughout the description and the claims denotes cellulose fibers from wood or other plant based material, where the cellulose fibers have not undergone a process where the cellulose fibers are processed into a pulp and subsequently extruded to a fiber. Examples of natural cellulose fibers include but are not limited to cotton, flax, hemp, jute, and ramie.

The term "man-made cellulose fibers" as used throughout the description and the claims denotes cellulose fibers, where the cellulose fibers have undergone a process where the cellulose fibers are processed into a pulp and subsequently extruded to a fiber. Examples include but are not limited to lyocell and viscose. Such fibers are produced by regeneration of dissolved forms of cellulose. The major man-made cellulosic fibre is rayon, a fibre produced by regeneration of dissolved forms of cellulose.

The term "recycling" as used throughout the description and the claims denotes a process of converting waste materials into new materials.

The term "textile" as used throughout the description and the claims denotes a flexible material made by creating an interlocking bundles of yarns or threads, which are produced by spinning fibers into long and twisted lengths. Textiles are then formed by weaving, knitting, crocheting, knotting, tatting, felting, bonding or braiding these yarns together. Combinations of these techniques can also be used to make textiles.

If nothing else is defined, any terms and scientific terminology used herein are intended to have the meanings commonly understood by those of skill in the art to which this invention pertains.

All percentages and ratios are calculated by weight unless otherwise stated.

In the first aspect there is provided a method for recycling a mixture of textiles comprising natural cellulose fibers and man-made cellulose fibers, said method comprising the sequential steps:

a. providing at least one textile material, wherein the at least one material comprises natural cellulose fibers and man-made cellulose fibers,
b.mechanically disintegrating the material,
c. treating the material to swell the cellulose fibers in an aqueous solution during a time in the interval 5 minutes to 24 hours, preferably 20 minutes to 120 minutes, under reducing conditions, wherein at least one reducing agent is present at least during a part of the swelling, wherein the pH is in the range 8-14, wherein the temperature is above 0 °C, but not exceeding 150° C,
d. performing at least one oxidative bleach,

wherein the time for the at least one oxidative bleach in step d) and a concentration of at least one bleaching substance in step d) are adjusted so that the limiting viscosity number as determined by ISO 5351:2010 for the resulting material after step d) is reduced to a value in the interval 200-1200 ml/g.

The at least one textile material provided in step a) always comprises both natural cellulose fibers and man-made cellulose fibers. The at least one textile material provided in step a) is in one embodiment a textile comprising both natural cellulose fibers and man-made cellulose fibers. The at least one textile material provided in step a) is in one embodiment a mixture of textiles comprising natural cellulose fibers and textiles comprising man-made cellulose fibers. Other mixtures of textiles are also encompassed as long as the mixture comprises both natural cellulose fibers and man-made cellulose fibers. The textile material to be recycled in step a) is in one embodiment pre- or post-consumer textile waste and comprises natural cellulose fibers and man-made cellulose fibers. The textile is in one embodiment a mixture comprising both natural cellulose fibers with a lumen and man-made cellulose fibers without a lumen. In another embodiment there is a mixture of textiles comprising natural cellulose fibers with a lumen and textiles comprising man-made cellulose fibers without a lumen. Combinations of different textiles are also encompassed. Additionally textiles comprising other fibers may be present as well.

The at least one textile material is also referred to as "the material" and when the various process steps are performed the resulting material is also referred to as "the material" even if the material has changed in the different process steps.

In one embodiment, the at least one textile material provided in step a) comprises 1-99 wt% natural cellulose fibers and 99-1 wt% man-made cellulose fibers. In one embodiment, the at least one textile material provided in step a) comprises 1-99 wt% natural cellulose fibers. In one embodiment, the at least one textile material provided in step a) comprises 99-1 wt% man-made cellulose fibers. In one embodiment, the at least one textile material provided in step a) comprises 5-95 wt% natural cellulose fibers and 95-5 wt% man-made cellulose fibers. In one embodiment, the at least one textile material provided in step a) comprises 10-90 wt% natural cellulose fibers and 90-10 wt% man-made cellulose fibers. The at least one textile material provided in step a) may further comprise various additional fibers in addition to the natural cellulose fibers and man-made cellulose fibers. In one embodiment the at least one textile material provided in step a) comprises at least 1 wt%, preferably at least 5 wt%, more preferably at least 10 wt%, most preferably at least 20 wt% of natural cellulose fibers. In one embodiment the at least one textile material provided in step a) comprises at least 1 wt%, preferably at least 5 wt%, more preferably at least 10 wt%, most preferably at least 20 wt% of man-made cellulose fibers. In one embodiment the at least one textile material provided in step a) comprises at least 1 wt%, preferably at least 5 wt%, more preferably at least 10 wt%, most preferably at least 20 wt% of cotton and at least 1 wt%, preferably at least 5 wt%, more preferably at least 10 wt%, most preferably at least 20 wt% of viscose. Viscose denotes viscose rayon, i.e. rayon made using the viscose process. It is an advantage that it is easy to recycle mixtures comprising both natural cellulose fibers and man-made cellulose fibers with the same process.

Natural cellulose fibers have a lumen, whereas man-made fibers are without lumen in a botanical sense, but in rare cases they can have a cavity in the middle of the fiber.

The invention is based on the finding that natural cellulose fibers with a lumen such as cotton are degraded to a much higher extent compared to man-made cellulose fibers without a lumen such as viscose, during the process according to the invention. Natural cellulose fibers generally have a lumen, where liquid is transported when it is in a plant or tree. The lumen thus has a function to transport liquid in the living plant or tree. Man-made fibers are without lumen in this botanical sense. Recycled textiles often comprise mixtures of several types of fibers often including natural cellulose fibers with a lumen and man-made cellulose fibers without a lumen, for instance a mixture of cotton and viscose.

The material is first mechanically disintegrated and this is done with conventional and known methods such as beater or similar mechanical treatment as known in the art. The mechanical treatment can either be done with or without contact with an aqueous solution.

The material is in step b) contacted with an aqueous solution with elevated pH in order to swell the cellulose fibers.

The material is then in step d) bleached with at least one oxidative bleach. Examples of an oxidative bleach include but is not limited to hydrogen peroxide, ozone and $ClO_2$. The bleaching in step d) is a viscosity reducing step, since it reduces the limiting viscosity number of the mixture. The bleaching is adapted so that the limiting viscosity number as determined by ISO 5351:2010 for the resulting material after step d) is reduced to a value in the interval 200-1200 ml/g. In particular the bleaching time and/or the concentration of the bleaching agent is adjusted to achieve the desired viscosity. If the viscosity of the starting material is so low that the limiting viscosity number before step d) is below 1200 ml/g, then the limiting viscosity number is reduced to a value below the value before step d). There is always a reduction in the limiting viscosity number for the mixture since at least the natural cellulose fibers are degraded during the process so that the limiting viscosity number for the entire mixture is reduced. The skilled person can select a longer bleaching time and/or a higher concentration of the bleaching agent(s) to achieve more bleaching and thereby a stronger reduction of the limiting viscosity number. The skilled person can adjust the bleaching time and/or the concentration of the bleaching substance(s) to obtain the desired limiting viscosity number as determined by ISO 5351:2010 in the interval 200-1200 ml/g. As an example a limiting viscosity number for the entire mixture of 2000 ml/g can be reduced to a limiting viscosity number of 1200 ml/g or lower, such as 400 ml/g. A limiting viscosity number of 900 ml/g can be reduced to a value below 900 ml/g, for instance 300 ml/g. The starting material should be such that the limiting viscosity number is above 200 ml/g for the starting material. It must also be understood that the method cannot increase the limiting viscosity number and thus the initial starting viscosity number is also an upper limit of the final limiting viscosity number. If the initial limiting viscosity number is $200 + x + \Delta$ ml/g, where $\Delta$ is the reduction of the limiting viscosity number during the method and x is a positive number, then a limiting viscosity number of $200 + x$ ml/g can be reached. For mixtures comprising a high content of viscose the limiting viscosity number is not that far from 200 ml/g. For mixtures comprising a higher fraction of natural cellulose fibers such as cotton the limiting viscosity number is typically much higher. The final limiting viscosity after step d) will be between 200 ml/g and the initial limiting viscosity number, but only up to 1200 ml/g, or another desired upper limit which is lower than 1200 ml/g. In alternative embodiment the limiting viscosity number as determined by ISO 5351:2010 for the resulting material after step d) is reduced to a value in the interval 200-1300 ml/g. In yet an alternative embodiment the limiting viscosity number as determined by ISO 5351:2010 for the resulting material after step d) is reduced to a value in the interval 200-1400 ml/g.

The reduction of the limiting viscosity number for the resulting material is mainly due to a degradation of the natural cellulose fibers with a lumen such as cotton, whereas the man-made cellulose fibers without a lumen are not degraded to any significant degree under the same conditions. The resulting mixture will thus achieve a suitable limiting viscosity number as determined by ISO 5351:2010 in the interval 200-1200 ml/g.

In one embodiment, the time for the at least one oxidative bleach in step d) and the concentration of at least one bleaching substance in step d) are adjusted so that the limiting viscosity number as determined by ISO 5351:2010 decreases more than 20% for the natural cellulose fibers and less than 20% for the man-made cellulose fibers. This reduction can be determined by performing the method separately for the different constituents, i.e. for the natural cellulose fibers and the man-made cellulose fibers separately. Thus a test can be made where natural cellulose fibers and man-made cellulose fibers are subjected to the process separately. Then the time and concentration can be adjusted to obtain the desired values. After this the obtained time and concentration can be applied to a mixture of natural cellulose fibers and man-made cellulose fibers. Since the natural cellulose fibers degrade more than the man-made fibers this adjustment of time and concentration is easy to make.

In another embodiment the adjustment is made so that the limiting viscosity number as determined by ISO 5351:2010 decreases more than 10% for the natural cellulose fibers and less than 10% for the man-made cellulose fibers.

If the starting material comprises a lot of man-made cellulose fibers without a lumen, but a low amount of natural cellulose fibers with a lumen, then the limiting viscosity number for the initial mixture is likely to be close to the desired value and the natural cellulose fibers with a lumen will be degraded so that the resulting mixture will achieve its final limiting viscosity number.

If the initial mixture on the other hand comprises few man-made cellulose fibers without a lumen, but a high amount of natural cellulose fibers with a lumen, then the limiting viscosity number for the initial mixture will likely be higher than the desired value and the natural cellulose fibers with a lumen will also in this case be degraded so that the resulting mixture will achieve its final limiting viscosity number.

The man-made cellulose fibers without a lumen should not be degraded during recycling and the present invention assures that they are only degraded to a very small extent, if degraded at all. This is achieved at the same time and under the same conditions as the natural cellulose fibers with a lumen are degraded. In addition the reactivity is improved for the material.

In order to prepare the material for a subsequent viscose process it is necessary to decrease the viscosity, (i.e. the limiting viscosity number as determined by ISO 5351:2010. The viscosity limiting viscosity number is in general decreased by degrading the cellulose by various methods.

The desired limiting viscosity number as determined by ISO 5351:2010 for the resulting material after step d) depends on the intended us of the material. If the material is to be used in a viscose process, then the limiting viscosity number as determined by ISO 5351:2010 for the resulting material after step d) is in the interval 200-700 ml/g and the resulting material after step d) is used as starting material in a viscose process.

This has a particular advantage since in the viscose process the need for a mercerization and pre-ageing is reduced. More in detail the mercerization will still be needed, but the treatment time can be reduced. Pre-ageing can be reduced or even eliminated since no further degradation is needed if the raw material comprises close to 100 wt% viscose or if there is a large fraction such as more than 75 wt% of viscose in the raw material. This is because there is no need or a less need to reduce the degree of polymerization, DP, of the viscose dope. Thus a subsequent viscose process can be carried out more efficiently when using the present invention to treat the mixture of recycled textile.

The resulting material after step d) can also be used for manufacturing cellulose acetate. Thus in one embodiment the limiting viscosity number as determined by ISO 5351:2010 for the resulting material after step d) is in the interval 600-1200 ml/g and wherein the resulting material after step d) is used as starting material for manufacturing cellulose acetate. Also when cellulose acetate is manufactured, it is an advantage that the reactivity is improved.

For man-made fibers such as viscose the cellulose should preferably not be degraded during the recycling process, at least not to any significant degree. However, for natural cellulose fibers such as cotton it is necessary to degrade the cellulose fibers so that the limiting viscosity number is decreased before the material is used further in a subsequent process. This may seem as a difficult problem, since it is desirable to keep the viscosity of the man-made fibers and at the same time decrease the viscodity for the natural cellulose fibers.

The invention is based on the finding that the method according to the invention degrades cellulose differently. Natural cellulose fibers comprising a lumen such as cotton are degraded to a high degree, whereas man-made cellulose fibers such as viscose are only degraded to a very limited extent under the same conditions. Thus it is possible to treat natural cellulose fibers and man-made cellulose fibers in the same process, where the natural cellulose fibers will be degraded to a large extent and the man-made cellulose fibers will only be degraded to a very little degree. Then both natural cellulose fibers and man-made cellulose fibers can be treated in the same process and at the same time and with the same conditions. This eliminates the need to separate textiles before recycling.

The natural cellulose fibers such as cotton fibers comprise a lumen, which is an open space roughly in the center of the macrofibril in cellulose. In nature liquids are transported in the lumen. One example of a natural cellulose fiber is a cotton fiber.

Man-made cellulose fibers on the other hand do not comprise a lumen in a botanical sense. Man-made cellulose fibers may occasionally exhibit a certain porosity and/or cavities, but that is not a lumen. One example of a man-made cellulose fiber is a cellulose fiber made using the viscose process, i.e. a viscose fiber.

Without wishing to be bound by any particular scientific theory the inventors believe that the swelling under reducing condition affect the fibers differently and that the natural cellulose fibers with a lumen absorb more liquid during the swelling under reducing conditions compared to the man-made fibers. The inventors speculate about why viscose, with a lower starting limiting viscosity number is less prone to degrade; the differences in morphology between the viscose and cotton fibers might be an explanation. The viscose constitutes of the less accessible cellulose II. The lowered accessibility in cellulose II compared to cellulose I in cotton could therefore be considered a factor of the lowered degradation rate. Adding to the hypothesis of the morphology influencing the degradation rate are the differences of the fibers. The viscose fibers are more compact and thereby have a lower surface area than the original cotton fibers. The more compact the fibers are the less accessible they are as the available surface area is smaller. The swelling under reducing conditions would play a role since the reducing compound during the swelling may be more prone to enter the natural fibers with a lumen compared to the man-made fibers without a lumen.

As known in the prior art reclaimed cellulose can be regenerated and used for production of moulded bodies. Examples of such processes include but are not limited to: i) the Lyocell process, in particular using aqueous amine oxide, such as 4-methylmopholine N-oxide (EP 0356419 and EP 0584318), ii) the viscose process (Kurt Götze, Chemiefasern nach dem Viskoseverfahren, 1967) and iii) the Modal process (AT 287905).

It is conceived that the present method is intended to be carried out together with additional steps and stages in the regeneration of reclaimed cellulose, such as an initial collection of textiles to be recycled, and also subsequent steps such as a subsequent viscose process or other use of the material. Additional stages are known in the art and can easily be combined with the steps according to the invention by a skilled person. A number of additional steps are suitably performed in the regeneration of reclaimed cellulose as described in the prior art.

In one embodiment the natural cellulose fibers are cotton fibers and wherein the man-made cellulose fibers are viscose fibers. Natural cellulose fibers generally have a lumen. Cotton fibers have a lumen. Man-made fibers based on cellulose do not have a lumen in a botanical sense. Viscose fibers do not have a lumen in a botanical sense. In practice it turns out that mixtures comprising both cotton fibers as well as viscose fibers are common and the invention is particularly suited to handle such mixtures. Reclaimed textiles typically comprise both cotton, viscose and various other fibers.

In one embodiment the pH during step c) is in the range of 11-13.3. The swelling of cellulose is more efficient at elevated pH such as above 7 or above 8. It is even more efficient in the interval 11-13.3.

In one embodiment NaOH is present during step c). NaOH is an economic way of increasing the pH although other basic compounds can be used as well.

In one embodiment the temperature during step c) is in the range 50-100 °C. In an alternative embodiment the temperature is in the range 0-100 °C. Cellulose will also swell in cold (0-20 °C) solutions so it is not necessary to heat the solution during swelling, although the swelling may be faster if heated. In yet another embodiment the temperature is in the range 20-100 °C. Also higher temperatures than 100 °C are encompassed. When the pressure is increased above atmospheric pressure temperatures above 100 °C can also be used. In one embodiment the temperature during step c) is up to 130 °C with a corresponding pressure so that the water is still in liquid state. When temperatures above 100 °C are used the pressure is selected so that the water is still liquid, i.e. the pressure is increased compared to atmosphereic pressure. The pressure should be such that the liquid water does not change into gas phase. In one embodiment the pressure at about 130 °C is at least about 2.7 bar. Alternatively the temperature can be even higher than 130 °C and in in another embodiment the temperature during step c) is up to 150 °C with a corresponding pressure so that the water is still in liquid state.

In one embodiment the at least one reducing additive comprises sodium dithionite, $Na_2S_2O_4$. Also other reducing compounds can be used. In one embodiment the at least one reducing additive comprises sodium dithionite, $Na_2S_2O_4$ in an amount of 5 - 50 kg sodium dithionite per ton dry weight of recycled textile material provided in step a). In another embodiment the at least one reducing additive comprises sodium dithionite, $Na_2S_2O_4$ in an amount of 5 - 80 kg sodium dithionite per ton dry weight of recycled textile material provided in step a). In yet another embodiment the at least one reducing additive comprises sodium dithionite, $Na_2S_2O_4$ in an amount of 5 - 100 kg sodium dithionite per ton dry weight of recycled textile material provided in step a). The weight of the material is taken when it is provided in step a) and calculated as dry weight, i.e. disregarding any water that may be present in the material. The reducing additive is an additive which is added to create a reducing environment. A higher amount than 100 kg sodium dithionite per ton dry weight of recycled textile material provided in step a) is also possible to use but has proven to be uneconomical due to the cost of sodium dithionite.

The oxidative bleach in step d) is in one embodiment one step, but in alternative embodiments it comprises several steps. The oxidative bleach in step d) can be composed of at least one of a number of oxidative bleaching steps. In one embodiment, the at least one oxidative bleach in step d) comprises bleaching the material with hydrogen peroxide. In one embodiment the at least one oxidative bleach in step d) comprises bleaching the material with ozone at acid conditions below pH 6. In one embodiment, the at least one oxidative bleach in step d) comprises bleaching the material with $ClO_2$. In one embodiment the at least one oxidative bleach in step d) comprises a combination of the mentioned bleaching steps.

In one embodiment, the at least one oxidative bleach in step d) is carried out at a temperature in the interval 60-120 °C.

In one embodiment the at least one oxidative bleach in step d) is carried out during 20 minutes - 24 hours.

In one embodiment, the at least one oxidative bleach in step d) is carried out during 30 min - 120 min.

In one embodiment the bleaching in step d)-i) is carried out at a temperature in the interval 60-120 °C. It is understood that if the temperature should exceed 100 °C then the pressure should be adapted so that any water is still in liquid phase.

In one embodiment the bleaching in step d)-i) is carried out during 20 minutes-24 hours. In an alternative embodiment the bleaching in step d)-i) is carried out during 30 min-120 min.

In one embodiment a wash is carried out before step d).

In one embodiment the material is dewatered to a water content of less than 66 wt% before step d). In an alternative embodiment the material is dewatered to a water content of less than 70 wt% before step d).

In one embodiment the pH during step d) ii) is in the interval pH 1.5-5.

In one embodiment the material is washed after step d).

In one embodiment the material is recovered after step d) and used as in a viscose process. The process is suitable as a treatment of recycled textile before a viscose process. Natural cellulose fibers such as cotton have their limiting viscosity number reduced, whereas man-made cellulose fibers such as viscose are hardly affected at all by the process and the treated material is suitable to use in a subsequent viscose process.

In one embodiment, a step of removing non-cellulosic fibres is performed. Examples of such non-cellulosic include but are not limited to fibres comprising polyester, elastan, acryl. In one embodiment, the removal of non-cellulosic fibres is carried out by flotation of the textile pulp. In addition or alternatively removal of non-cellulosic fibers is carried out by filtration and/or other types of separation in the viscose dope. In one embodiment non-cellulosic fibers are not removed or only removed to some extent during the steps a) - d). If necessary the non-cellulosic fibers can be removed during subsequent use of the material such as during manufacture of viscose for instance by filtration of other separation.

In one embodiment, the starting material originate from pre-consumer textile waste. Pre-consumer textile waste includes but is not limited to combing waste and cuttings. In one embodiment, the starting material originate from post-consumer textiles. Post-consumer cellulose containing waste includes but is not limited to laundry waste and used clothes.

In one embodiment, the production of moulded bodies is made with the Viscose process. In one embodiment, the production of moulded bodies is made with the Lyocell process. In one embodiment, the production of moulded bodies is made with the Modal process. These processes for production of moulded bodies are known in the art and can be performed by a skilled person.

In one embodiment the man-made cellulose fibers in step

a) are viscose fibers made from recycled textiles.

In one embodiment the man-made cellulose fibers in step a) are viscose fibers made from recycled textiles. It has turned out that when the man-made fibers are made from recycled textiles, then the resulting material after step d) becomes very reactive, i.e. the reactivity as measured for instance by a Fock test becomes very high. Since the cellulose in man-made cellulose fibers such as viscose fibers is not degraded to any significant extent, this also shows that it is possible and suitable to recycle viscose fibers many times using the present method, which provides as sustainable system for recycling textiles. As shown in the experimental section the cellulose is not degraded to any significant extent and as shown in the experimental section the reactivity becomes better than most other materials. In particular the reactivity becomes very good for the second recycling of textiles, i.e. when fibers have been recycled twice using the present method.

In one embodiment viscose fibers are made from the material resulting from step d) and wherein the method is repeated wherein the viscose fibers are recycled in step a). In this embodiment viscose fibers are made from the material resulting from step d) and these viscose fibers are made into textiles, which after their use are recycled and provided as the man-made cellulose fibers in step a) in the method. The material after step d) then becomes particularly high reactivity.

In one embodiment the reactivity of the material resulting from step d) is more than 80%, preferably more than 90%.

There is further disclosed a method for improving the reactivity of recycled viscose, said method comprising the sequential steps:

a. providing at least one textile material, wherein the at least one textile material comprises man-made cellulose fibers such as viscose which have at least partially been manufactured from recycled textiles,
b.mechanically disintegrating the material,
c. treating the material to swell the cellulose fibers in an aqueous solution during a time in the interval 5 minutes to 24 hours, preferably 20 minutes to 120 minutes, under reducing conditions, wherein at least one reducing agent is present at least during a part of the swelling, wherein the pH is in the range 8-14, wherein the temperature is above 0 °C,
d. performing at least one oxidative bleach,

wherein the time for the at least one oxidative bleach in step d) and a concentration of at least one bleaching substance in step d) are adjusted so that the limiting viscosity number as determined by ISO 5351:2010 for the resulting material after step d) is reduced to a value in the interval 200-1200 ml/g.

As shown in the examples the reactivity of the material becomes excellent.

Examples

Textile and pulp material

Cotton-based standard denim was used as one starting material and will be referred to as 'Regular denim'.

Regular cotton-based denim with a brighter bleach than the Regular denim was used. The garment will further be referred to as 'Light blue regular denim' . Circulose® is a dissolving pulp. This pulp is made with the intention to be used for instance in the viscose or lyocell processes to produce new recycled fabrics. Also other uses are envisioned.

The Circulose® was manufactured by providing at least one textile material comprising cellulose, treating the material to swell the cellulose, under reducing conditions, wherein at least one reducing agent was present at least during a part of the swelling. Thereafter the material was bleached with ozone under acid conditions below pH 6. The material was used as a starting material for a viscose process to make viscose from recycled textiles.

The cotton-viscose denim was made of 60 wt% cotton and 40 wt% viscose where half of the viscose was viscose made from Circulose®. Two different kinds of this denim were used, one with the original dye and one that had been bleached. They will further be referred to as 'Dark blue cotton-viscose denim' and 'Light blue cotton-viscose denim' respectively. They are distinguished from the regular denim by the absence of the word "regular".

Furthermore, garments containing 100% traditional wood-based viscose were bought from a secondhand store, they will be referred to as '100% Viscose'. All textiles (except Light regular denim and Dark blue cotton-viscose denim) have been shredded by a machine. Light regular denim and Dark blue cotton-viscose denim were cut by hand into pieces with similar dimensions as the shredded pieces.

Dissolving pulp Circulose® was used in some trials. The pulp was received from the Renewcell production line at Kristinehamn. The Circulose® was made as described above.

Viscose filaments made from 100 wt% Circulose® were received from Fraunhofer institute, Germany. The filaments had been made of Circulose® from Kristinehamn mill. The filament sample will further be referred to as '100 wt% Circulose® viscose'.

The shredded textile was processed in a kitchen blender, for 40 s at maximum effect. The blended textile was then weight in and defibrillated in a disintegrator using 30.000 revolutions (PTI Austria). The fiber mixture was washed with more deionized water and filtered to reach a dry content level of about 30%.

The mixture was then subjected to swelling under reducing conditions, which can also be considered to be a first bleaching step as well as a viscosity reducing step. The mixture was diluted with a NaOH solution (pH 12) to a 2.5 wt% concentration. Sodium dithionite was added to the diluted mixture to a concentration of 40 kg sodium dithionite/ton of fiber (calculated based on dry weight). The reaction mixture was sealed in a plastic bag and immersed into a 70°C water bath for 30 min. The pulp was thereafter thoroughly washed with deionized water.

The second bleaching step, which also can be considered to be a viscosity reducing step, was carried out with ozone. The pulp was acidified using a $H_2SO_4$ solution (1%) and then pressed to reach a dry content of about 30-33%. The pressed pulp was then processed in the kitchen blender for 20 s, on maximum effect. The shredded pulp was placed in a round bottom flask and mounted onto a rotary evaporator. The rotary evaporator was connected to the ozone generator and the ozone was led into the round bottom flask by a tube. During the ozone bleaching the round bottom flask was set to a rotation speed that allowed the pulp to tumble. After the ozone bleaching the pulp was rinsed with deionized water.

Fock test

Fock test is a common test method to evaluate the reactivity of the cellulose. The Fock test consists of a simplified viscose process from where the percentage of reacted cellulose is calculated.

It is possible to measure the reactivity gravimetrically or by titration. In this case the method by titration is selected.

Fock test titration

The sample preparation for Fock test with titration determination of the reactivity was similar to the preparation procedure stated above. 10 ml of the supernatant was used and neutralized with 3 ml of $H_2SO_4$ solution (20%). The mixture was left overnight followed by an addition of 20 ml $H_2SO_4$ (68%). The acidic solution was left with magnetic stirring for one hour. Potassium dichromate (10 ml, 1/6 M) was added and the mixture was refluxed for one hour. After cooling the mixture was diluted to a total volume of 100 ml with deionized water. 40 ml of the diluted mixture was used for titration to which an excess of potassium iodine was added. The titration was done with sodium thiosulfate (0.1 M) and starch was used as an indicator. The reactivity was calculated using the following equations.

$$A = (V_1 * C_1) - \left(V_2 * C_2 * {}^{100}\!/_{40} * {}^{1}\!/_{6}\right)$$

where A is the amount of reacted dichromate, $V_1$ and $C_1$ is the addition (l) and concentration of dichromate, $V_2$ and $C_2$ is the amount of used sodium thiosulfate and the concentration, respectively. Since only 40 ml out of 100 ml was used for the titration, a 100/40 multiplication factor was added. The factor of 1/6 was based on the stoichiometric balance where one dichromate ion consumes six thiosulfates.

$$B = A * (M * \frac{1}{4})$$

where B is the amount of reacted cellulose in the titration mixture and M is the molecular weight of one glucose unit. The factor of ¼ is based on the stoichiometric balance where one glucose unit consumes four dichromate ions.

$$C = \left( \frac{100 * \frac{100}{10,4} * B}{y} \right)$$

where C is the reactivity and y is the weight of the starting pulp material. The 100/10.4 factor compensate the calculations since only 10 ml of the diluted 100 ml solution was used for the titration

PDI analysis

Polydispersity index analysis was used to determine the molecular weight distribution. The analysis was conducted by MoRe Research using a size exclusion chromatography, SEC with a LiCl/DMAc system.

The degradation throughout the pulping process

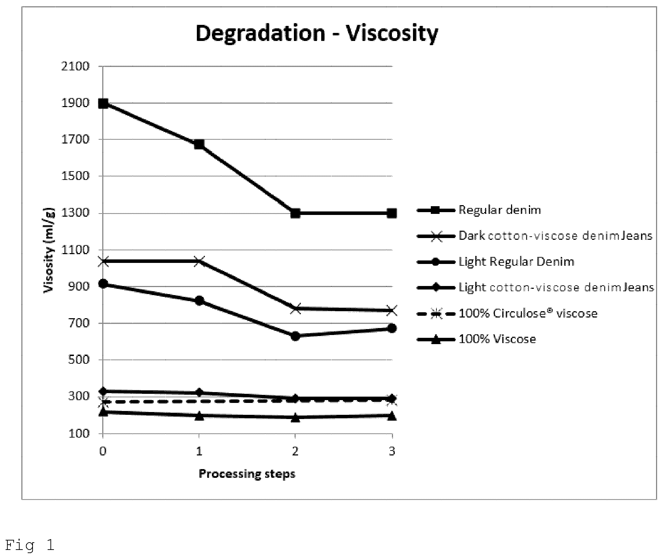

To characterize the differences in degradation for different textiles in the pulping process, samples of all different fabrics was processed using the same protocol. For the predetermined protocol the time for the ozone bleaching was 2.5 min, resulting in 0.42 g of ozone per 5 g of textile pulp. After each step the viscosity was measured to determine the degradation of the cellulose. The viscosity data is presented below in Figure 1.
As can be seen in figure 1, the starting viscosity varied extensively between Regular denim and the rest of the samples. A high viscosity remained for the Regular denim throughout the recycling process resulting in a too high viscosity to be suitable for the viscose production. A more aggressive degradation would have to be done for the Regular denim. Despite the mild treatment for the Regular denim, it was the pulp type which experienced the largest drop in viscosity. The Regular denim started with a viscosity of 1900 ml/g and had a viscosity of 1300 ml/g at the end of the pulping process and thereby had a relative viscosity drop of about 32%. This in comparison with the other textile types which had a degradation between 25 and 9%. The textile type with the second largest viscosity reduction, 25%, was the Dark blue cotton-viscose denim, which had a starting viscosity of 1040 ml/g. All textile types follow the trend of a smaller viscosity reduction with a lower starting viscosity. For the pulps with the lowest starting viscosities a status quo seemed to have been reached where the viscosity did not degrade further.
Comparing the starting viscosity of the textile samples with different (bleached) colors, a large difference and trend can be seen. The more bleached samples, Light blue cotton-viscose denim and Light blue regular denim had a lower viscosity then their darker counterparts, Dark blue cotton-viscose denim, and Regular denim. Regarding the cotton-viscose denim fabrics, they were both made of the same originating fabric where the Light blue cotton-viscose denim fabric had been bleached to the light blue color and the Dark blue cotton-viscose denim was not bleached as much. The change in starting viscosity between the two displays the extended effect that the bleaching process has on the fabric.

PDI results

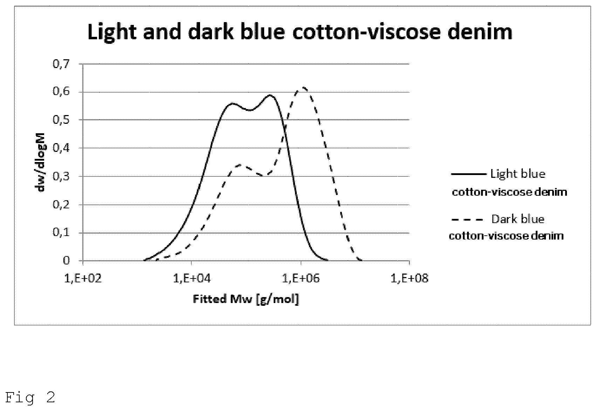

The PDI analysis was conducted on pulped cotton viscose denim, both dark and light blue, pulped Regular denim and the 100% Circulose® viscose from Fraunhofer, both the raw filaments and pulped again to 2nd generation Circulose®.
The mixed material in both cotton-viscose denim can clearly be seen in the PDI analysis distribution curves as two peaks. As expected, these two have the highest PDI of all the analyzed samples. The Dark blue cotton-viscose denim pulp had a PDI of 12.2 and the Light blue cotton-viscose denim pulp had a PDI of 5.8. As showed in Figure 2, and confirmed by the PDI, the difference in the viscose and cotton originated peaks are smaller for the Light blue cotton-denim viscose. The smaller difference is due to the prior bleaching performed on the Light blue cotton-viscose denim. The bleaching degrades the cellulose, as seen in the viscosity differences between the two cotton-viscose denim fabrics. However, the PDI analysis showed that the degradation is not evenly distributed over all cellulose chains. The cellulose from the cotton is in larger extent degraded then the cellulose from the viscose, bringing the peaks closer together. The Dark blue cotton-viscose denim had a higher amount of raw cotton contributing to the large scattering in the sample.
The distribution plots for the 100% Circulose® viscose and the pulped 2nd generation Circulose® are similar in shape as displayed in Figure 2. There is a small shift in the peak between the samples as the 2nd generation viscose from Circulose® has been slightly degraded. The average molecular weight Mw of the non-pulped 100% Circulose® viscose is 152 compared to the pulped one of 131. The shape of the distribution curves is similar showing no large formation of oligomers being created during the pulping process. Additionally, the PDI do not increase from the raw filament to the pulped one. On the contrary, the PDI decreases from 3.4 to 3.3. The decrease is too small to be statically valid, however, a steady or decreasing PDI is an additional indication of the cellulose reaching a plateau in the degradation rate.

Reactivity

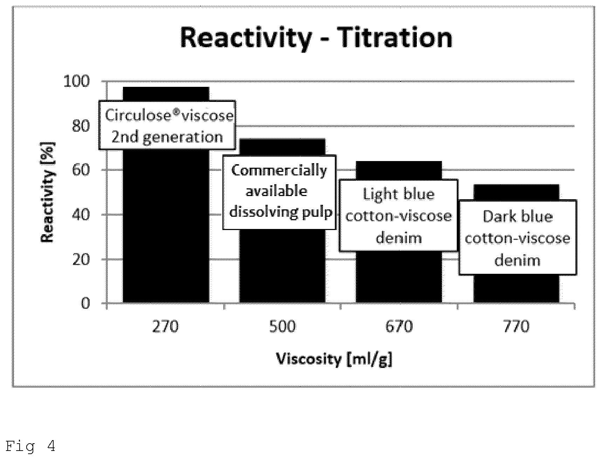

The pulp samples' reactivity was determined by performing the Fock test. The Fock test was performed on Dark and Light blue cotton-viscose denim respectively, pulped 2nd generation Circulose® and as reference, and commercially available dissolving pulp, which was a commercially available sulphite pulp. As Figure 4 shows the reactivity of the pulps varied a lot. A trend of a higher reactivity at lower viscosity could be seen. A higher viscosity is related to a higher DP, i.e., chain length of the cellulose. The higher DP can contribute a lower accessibility which reflects into a lower reactivity.

Both the pulps from cotton-viscose denim were close in reactivity, with a slightly higher reactivity for the Light blue cotton viscose denim. The Dark blue cotton viscose denim had a higher viscosity and the difference in the reactivity could therefore be explained by the as aforementioned viscosity-reactivity trend.

The 2nd generation Circulose® showed the highest reactivity of nearly 100%. This is an interesting property to consider when the 2nd generation Circulose® is to be processed through the viscose process. The high reactivity could change the need of certain steps in the viscose process and leading up a modification of the entire process. The viscose process becomes simpler. Even an addition of 2nd generation Circulose® will improve the reactivity since the fraction of material with high reactivity will increase.

**Claims**

1. A method for recycling a mixture of textiles comprising natural cellulose fibers and man-made cellulose fibers, said method comprising the sequential steps:

   a. providing at least one textile material, wherein the at least one textile material comprises natural cellulose fibers and man-made cellulose fibers,
   b. mechanically disintegrating the material,
   c. treating the material to swell the cellulose fibers in an aqueous solution during a time in the interval 5 minutes to 24 hours, preferably 20 minutes to 120 minutes, under reducing conditions, wherein at least one reducing agent is present at least during a part of the swelling, wherein the pH is in the range 8-14, wherein the temperature is above 0 °C, but not exceeding 150° C,
   d. performing at least one oxidative bleach,

   wherein the time for the at least one oxidative bleach in step d) and a concentration of at least one bleaching substance in step d) are adjusted so that the limiting viscosity number as determined by ISO 5351:2010 for the resulting material after step d) is reduced to a value in the interval 200-1200 ml/g.

2. The method according to claim 1, wherein the natural cellulose fibers are cotton and wherein the man-made cellulose fibers are viscose.

3. The method according to any one of claims 1-2, wherein the pH during step c) is in the range of 11-13.3.

4. The method according to any one of claims 1-3, wherein NaOH is present during step c).

5. The method according to any one of claims 1-4, wherein the temperature during step c) is in the range 50-100°C.

6. The method according to any one of claims 1-5, wherein the at least one reducing additive comprises sodium dithionite, $Na_2S_2O_4$.

7. The method according to any one of claims 1-6, wherein the at least one reducing additive comprises sodium dithionite, $Na_2S_2O_4$ in an amount of 5 - 100 kg per ton dry weight of recycled textile material provided in step a).

8. The method according to any one of claims 1-7, wherein the at least one oxidative bleach in step d) comprises bleaching the material with hydrogen peroxide.

9. The method according to any one of claims 1-8, wherein the at least one oxidative bleach in step d) comprises bleaching the material with ozone at acid conditions below pH 6.

10. The method according to any one of claims 1-9, wherein the at least one oxidative bleach in step d) comprises bleaching the material with $ClO_2$.

11. The method according to any one of claims 1-10, wherein the at least one oxidative bleach in step d) is carried out at a temperature in the interval 60-120 °C.

12. The method according to any one of claims 1-11, wherein the material is dewatered to a water content of less than 66 wt% before step d).

13. The method according to any one of claims 1-12, wherein the man-made cellulose fibers in step a) are viscose fibers made from recycled textiles.

14. The method according to any one of claims 1-13, wherein viscose fibers are made from the material resulting from step d) and wherein the method is repeated wherein the viscose fibers are provided in step a).

15. The method according to any one of claims 1-14, wherein the time for the at least one oxidative bleach in step d) and the concentration of at least one bleaching substance in step d) are adjusted so that the limiting viscosity number as determined by ISO 5351:2010 decreases more than 20% for the natural cellulose fibers and less than 20% for the man-made cellulose fibers.

Fig 1

Fig 2

Fig. 3

Fig 4

**EP 4 471 206 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018104330 A
- US 20200347520 A
- WO 2018073177 A
- EP 0356419 A
- EP 0584318 A